# EUROPEAN PATENT SPECIFICATION

(11) **EP 2 808 209 B1**
(45) Date of publication and mention of the grant of the patent: **11.04.2018**
(21) Application number: 14169796.1
(22) Date of filing: 26.05.2014
(51) Int. Cl.: B60T 7/12

(54) **Method and system to decelerate a vehicle**
Verfahren und System zur Verzögerung eines Fahrzeugs
Procédé et système de ralentissement d'un véhicule

(30) Priority: 28.05.2013 SE 1350646
(43) Date of publication of application: 03.12.2014
(73) Proprietor: Scania CV AB, 151 87 Södertälje (SE)
(72) Inventor: Kovacevic, Igor, 191 34 Sollentuna (SE); Sapra, Gurdeep, 141 62 Huddinge (SE); Ledfeldt, Gunnar, 155 91 Nykvarn (SE); Rönnqvist, Patrik, 603 71 Norrköping (SE)
(74) Representative: Scania CV AB

(56) References cited:
- EP-A1- 0 992 412
- EP-A1- 2 036 791
- WO-A1-01/14186
- WO-A1-96/11826
- DE-A1- 10 103 013
- DE-A1-102005 054 754
- DE-A1-102007 023 928
- US-A1- 2005 096 183
- US-A1- 2011 202 305

## Description

### Field of the invention

The present invention pertains to a method to decelerate a vehicle according to the preamble of claim 1 and a system to decelerate a vehicle according to the preamble of claim 20. The invention also pertains to a computer program and a computer program product, which implement the method according to the invention, and a vehicle.

### Background of the invention

Motor vehicles, and in particular heavy goods vehicles, such as for example trucks and buses, are often driven with an activated cruise control function, wherein the vehicle's speed may be maintained at some applicable speed.

Further, heavy goods vehicles in particular are impacted by gravitation when driven on downhill slopes, so that the vehicle's speed increases. Cruise control functions in vehicles are also frequently of such type that it may be desirable for the vehicle's speed not to be maintained strictly at the set speed, but to be allowed to differ from the set speed, e.g. in order to take advantage of energy by allowing speed increases because of said gravitational power on downhill slopes.

Preferably, however, the vehicle speed is not permitted to increase to any random extent, but the speed increase to which the vehicle is subject is often restricted for different reasons, see e.g. EP 0992412.

For this reason, many heavy goods vehicles are equipped with a constant speed brake in order automatically to restrict the vehicle's speed increase, so that this does not exceed a predetermined speed.

The function for the constant speed brake is often such that a set-speed may be set by e.g. the vehicle's driver. The constant speed brake system then ensures that this set-speed is not exceeded by controlling the vehicle's speed with one or several brake systems.

There are different types of constant speed brakes, where one type consists of a manual constant speed brake, which may be used in e.g. situations when no cruise control function is activated, since it is usually desirable that the speed increase is restricted in such situations as well. In this case the vehicle's driver may in an applicable manner specify a desired set-speed, which is then used to control the vehicle's brake system so that the desired speed is not exceeded.

Another type of constant speed brake consists of an offset constant speed brake. Here the set-speed for the constant speed brake is determined with the use of an offset to a set-speed for a cruise control in the vehicle. If the offset constant speed brake is activated when a speed for a cruise control is set, the set-speed for the constant speed brake will depend on the cruise control's set speed, where the set-speed for the constant speed brake may thus be equal to the set-speed for the cruise control plus said offset. This offset may e.g. consist of any offset in the interval 1 km/h to 15 km/h. In practice, a common offset is 3 km/h.

In this case, the constant speed brake will thus prevent the vehicle's speed from e.g. exceeding a speed which is 3 km/h higher than the cruise control's set speed if the offset has been selected as 3 km/h. This type of constant speed brake may be applied in basically any cruise control functions, wherein the vehicle may be allowed to accelerate past the set cruise control speed until the constant speed brake's set-speed is reached, at which point the braking force is applied if required to prevent further speed increase. The vehicle's speed is then maintained at the constant speed brake's set speed until the positive driving force of gravity has lessened to such extent, that the vehicle's speed begins to decrease in relation to the set-speed of the cruise control.

### Summary of the invention

One objective of the present invention is to provide a method to decelerate a vehicle in situations where a speed limit has been exceeded. This objective is achieved with a method according to claim 1.

The present invention pertains to a method to decelerate a vehicle, wherein said vehicle comprises a control system and at least one brake system which may be activated by said control system in order to apply a braking force to decelerate said vehicle. The method comprises, when said vehicle is driven at a speed exceeding a first speed, estimating whether the application of a braking force is required in order for the speed of said vehicle to fall below said first speed before a first period of time has expired, and - when the application of a braking force is required, to request the application of a first braking force in order to decelerate said vehicle. Preferably, said vehicle is decelerated to a speed below said first speed before said first period of time has expired.

According to the above, the vehicle's speed may be permitted to increase past a speed which is e.g. set with a cruise control. This may be advantageous e.g. when the vehicle is driven on downhill slopes, where a speed increase thus often occurs by impact of gravitational force, and where it is often desirable, from a fuel economy point of view, to be able to take advantage of this kinetic energy to drive the vehicle at the end of the downhill slope, instead of braking away the energy.

This type of speed increase may also be used in situations where the driver drives the vehicle without any cruise control function being activated, where the driver may still take advantage of the extra energy which the higher speed represents at e.g. a subsequent uphill slope.

When the vehicle is driven the cruise control is often set at its maximum value when the applicable speed limit so permits, which for heavy goods vehicles may for example be 89 km/h or 90 km/h, depending on the manufacturer, where 90 km/h is the vehicle's maximum permitted speed, which may however vary from jurisdiction to jurisdiction, and also e.g. depending on whether the vehicle is driven with or without a connected trailer. For example, the maximum permitted speed for the vehicle may be 80 km/h when a trailer is connected. The constant speed brake is then set, automatically or by the vehicle's driver, e.g. to the cruise control speed plus an offset of e.g. 3 km/h or another applicable offset. Thus the constant speed brake is often set at for example 92 or 93 km/h or another applicable value.

When the vehicle reaches a downhill slope with these settings the vehicle will, because of gravitation, accelerate past the set cruise control speed, in order to subsequently be decelerated by the constant speed brake if the constant speed brake's set speed is reached before the end of the downhill slope, so that the constant speed brake prevents the vehicle's speed from increasing further.

This means that the vehicle, on longer downhill slopes, may have an actual speed which substantially corresponds to the constant speed brake's set speed during a relatively large part of the downhill slope, and thus also during a relatively long period of time. This also means that the vehicle's speed will exceed the vehicle's maximum permitted speed during a shorter or a longer period of time, depending on the downhill slope's length and/or gradient. This speeding violation may give rise to undesired consequences for the vehicle's driver.

Heavy goods vehicles such as trucks and buses are often equipped with tachographs. The tachograph continuously records, among others, the vehicle's speed. There is usually also a defined violation *v*ₗᵢₘ speed, which is known to the tachograph. This violation speed *v*ₗᵢₘ may be related to a maximum permitted speed for the vehicle and/or a prevailing speed limit for a relevant road section.

If the vehicle is not allowed to travel faster than e.g. 90 km/h, and/or if the speed limit for the relevant road section is 90 km/h, this violation speed may *v*ₗᵢₘ for example be set at 90.5 km/h, 91 km/h or another applicable or statutory speed. Herein consideration may also be had to roller circumference changes for the vehicle's wheels due to tyre wear, wherein the violation speed may be contingent on the expected tyre wear.

Further, the vehicle's tachograph is often arranged to register a remark, a so-called penalty point, in relation to a speeding violation for the driver, if the violation speed *v*ₗᵢₘ has been exceeded during at least a predetermined violation period T₁, which may e.g. be 60 seconds. Thus, a penalty point may be registered by the tachograph if the vehicle's current speed e.g. exceeds the violation speed *v*ₗᵢₘ of 90.5 km/h for a predetermined violation period T₁ of 60 seconds or of a different duration. This means, that if e.g. a downhill slope entails that the vehicle by virtue of the gravitational force accelerates beyond the violation speed *v*ₗᵢₘ in order to subsequently be prevented from continued acceleration by the constant speed brake at e.g. 92 km/h, but then remains at this speed for over 60 seconds, the driver will incur a penalty point for speeding by the tachograph. In addition, a new remark will be registered each time a new violation of such nature occurs.

In at least some countries, the police may require to access the information stored on that tachograph, and also impose fines based on this information, so that the vehicle's driver may thus be fined retroactively based on remarks in the tachograph, where each individual remark (penalty point) may constitute individual grounds for a fine. The remarks are registered on the driver's personal tachograph card, and these follow the driver from vehicle to vehicle.

Such remarks are for obvious reasons undesirable, and could be avoided by always limiting the vehicle's speed with the constant speed brake in such a way that the violation speed is never exceeded. This would however entail that a large amount of energy would often be braked away unnecessarily at the cost of e.g. fuel consumption. In many vehicles, the driver's attention is instead brought to the risk of incurring a remark before the violation period has expired. For example, the driver may be forewarned if the vehicle's current speed has exceeded the violation speed *v*ₗᵢₘ for a certain proportion of the permitted violation period, such as e.g. 45 seconds of the permitted 60 seconds. Since the driver normally does not want to incur a penalty point, and thus the risk to incur speeding fines, the driver's natural reaction to this forewarning in such situations is to brake the vehicle. However, this forewarning is not always noticed by the driver, e.g. because of the noise level prevailing in the driver's cabin when driving at e.g. 92 km/h. Further, other warning signals may be deemed to have a higher priority, so that the driver is not able to read the speeding warning at all.

According to the present invention, this is solved by determining, when the vehicle is driven at a speed exceeding the violation speed, whether the application of a braking force is required for the vehicle's speed to decrease to a speed below the violation speed *v*ₗᵢₘ before the violation exceeds some applicable period of time, such as e.g. the violation period T₁, which may thus be calculated from the point in time when said first speed is exceeded, for a remark to be registered. If it is determined that the application of a braking force is required for the vehicle's speed to decrease to a speed below the violation speed before the violation period has expired, the application of a braking force is requested so that said vehicle is decelerated, preferably to a speed below said violation speed *v*ₗᵢₘ.

This request may e.g. be made to the control device(s) which are in charge of the vehicle's brake systems, so that the applicable brake system may be activated. Thus the present invention entails that remarks relating to speeding violations may be avoided, since the vehicle's control systems actively brake the vehicle when there is a risk of speeding.

Said first braking force may be determined as a braking force with which the speed of said vehicle is expected to fall below the violation speed before the violation period has expired. Further, this braking force may be arranged to be applied only when a certain portion of the violation period has expired, e.g. in order not to brake away stored energy unnecessarily. The point in time for activation of said first braking force may also be arranged to be determined at least partly based on a remaining time period until said first period has expired, and/or the period of time which has lapsed since said first speed has been exceeded, in order to ensure that the vehicle is able to decelerate to a speed below said first speed before said first time period has expired. The duration of the deceleration may also be estimated and used in determining when the braking force should be activated.

The braking force may e.g. be determined based on one or several of: the vehicle's acceleration, the vehicle's speed, where these may be obtained via the control system or be determined based on speed data. The braking force may also be arranged to be determined wholly or partly based on available braking force, where this may be available in the vehicle's control system. The available braking force may also consist of a maximum braking force which it is undesirable to exceed, e.g. for comfort reasons.

Further, the braking force applied may be arranged to be evaluated continuously and if needed to be changed, e.g. depending on a change of the gradient of the surface on which the vehicle is travelling, which will impact e.g. the vehicle's acceleration/deceleration. The activation of said first braking force may then be interrupted when the speed for said vehicle is again below the violation speed.

Further characteristics of the present invention and advantages thereof will be described in the detailed description of example embodiments set out below and in the enclosed drawings.

### Brief description of drawings

- Fig. 1A: shows schematically a vehicle in which the present invention may be used.
- Fig. 1B: shows a control device in the control system for the vehicle displayed in Fig. 1.
- Fig. 2A-B: shows an example of how the speed of a vehicle changes when driving on a downhill slope.
- Fig. 3: shows an example method according to the present invention.
- Fig. 4: shows an example of an application of the present invention.

### Detailed description of embodiments

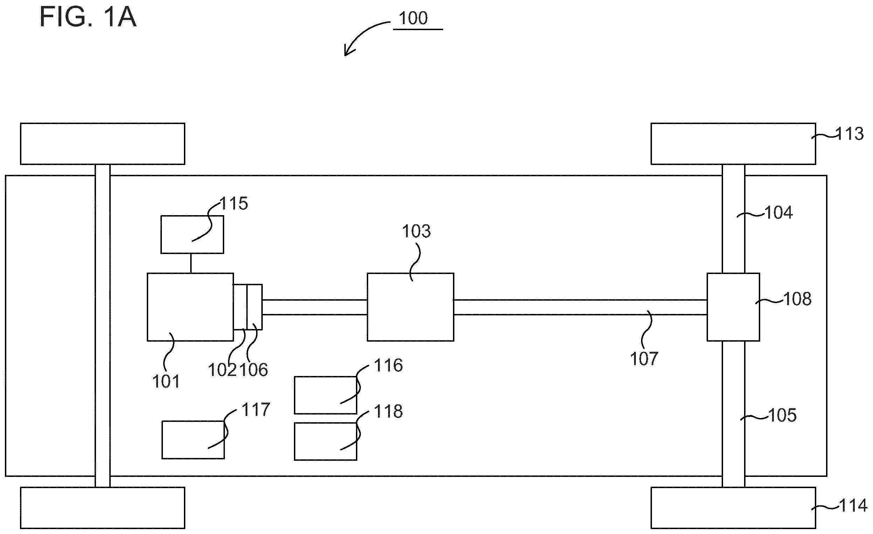

Fig. 1A shows schematically a drive line in a vehicle 100, according to an embodiment of the present invention. The invention is generally applicable in all types of vehicles where a braking force may be applied by the vehicle's control system, and the invention is particularly applicable in vehicles equipped with a tachograph.

The vehicle 100 schematically displayed in Fig. 1A comprises a drive line with a combustion engine 101, which in a customary manner, via an output shaft on the combustion engine 101, usually via a flywheel 102, is connected to a gearbox 103 via a clutch 106.

The combustion engine 101 is controlled by the control system of the vehicle 100 via a control device 115. Likewise, the clutch 106, which may consist of e.g. an automatically controlled clutch, as well as the gearbox 103, are controlled by the control system of the vehicle 100 with the help of one or more applicable control devices (not shown). The drive line of the vehicle 100 may also be of another type, such as e.g. of a type with a conventional automatic gearbox, or of a type with a manual gearbox, etc.

An output shaft 107 from the gearbox 103 drives the wheels 113, 114 via a final gear 108, such as e.g. a customary differential, and the drive shafts 104, 105 connected to said final gear 108.

The vehicle 100 of the type displayed also comprises at least one brake system, such as a customary service brake system. In the example displayed the service brake system is controlled by the control system of the vehicle 100 with the help of a brake control device 116, which sends signals, in a prior art manner, to e. g. the control(s) which control the braking force in the brake system, e.g. based on signals from the driver of the vehicle 100, or e.g. based on signals from a cruise control function or another applicable function in the vehicle.

At least heavy goods vehicles generally comprise various different brake systems, and the brake control device 116 also controls, according to the example displayed, other brake systems in the vehicle, such as e.g. one or several of an engine brake system, an electromagnetic deceleration brake system, a hydraulic deceleration brake system, an exhaust brake system etc., whose function is generally known to a person skilled in the art and is therefore not described in further detail herein. Such brake systems are often advantageous for use in moderate speed reductions, such as may be the case in the present invention and at constant cruise control (braking) on downhill slopes. Thus the ordinary service brake system is not unnecessarily worn or overheated.

When a brake system is activated according to the present invention, some applicable brake system may be activated, where e.g. the brake control device 116 may be in charge of which brake system(s) should actually be activated. Thus e.g. a specific braking force, e.g. expressed as a deceleration in m/s² or in another applicable form, may be requested according to the present invention, where e.g. this request may be addressed to e.g. the brake control device 116, which then requests the applicable activation of the brake system, where the choice of brake system is irrelevant for the present invention.

The vehicle 100 displayed in Fig. 1A also comprises a tachograph 117, which is among others used to register the speed of the vehicle 100, as set out above. The tachograph 117 is often connected with a sealed sensor, e.g. arranged on the output shaft of the gearbox, whose signals are used, in a customary manner, e.g. with knowledge of the rear shaft gear ratio and the wheel diameter, to determine the speed of the vehicle 100, for registration in the tachograph 117. The vehicle speed determined by the tachograph 117 is usually made available on the communication bus system of the vehicle 100, so that other control devices may also use the vehicle speed determined by the tachograph. According to one embodiment of the present invention, the speed of the tachograph 117 is therefore used when it is determined whether the vehicle 100 should be decelerated.

As mentioned above, the driver of the vehicle 100 often activates, at least on a high road/motorway, a cruise control function, e.g. set at the applicable speed limit and/or the maximum permitted speed of the vehicle 100, which for heavy goods vehicles may for example be 89 or 90 km/h when driving without a trailer, but which may also vary from jurisdiction to jurisdiction. When driving with a connected trailer the maximum permitted speed is often lower, such as e.g. 80 km/h.

Further, according to the above speeding violations may be registered by the tachograph, where such speeding violations may also take into consideration whether a trailer is connected, since such information is usually available via the communication bus system of the vehicle 100, and thus also to the tachograph 117, which may thus register the speeding violations also when driving with a trailer connected.

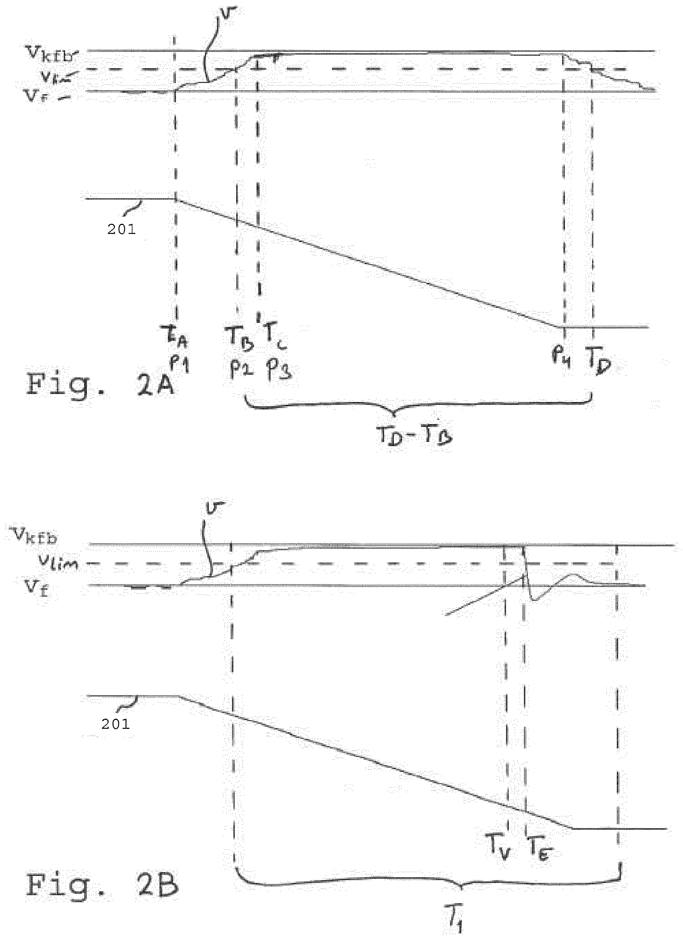

Fig. 2A shows an example of how the speed of the vehicle 100, when driving on a downhill slope, may vary as the vehicle 100 moves along the downhill slope 201. Up to the time T_{A} the vehicle 100 is travelling on a substantially plane surface and thus maintains substantially e.g. a set cruise control speed *v_{f}* . At the time T_{A}, when the vehicle 100 has reached the position P₁, the surface under the vehicle 100 becomes a downhill slope 201. On the downhill slope the vehicle 100 will be positively impacted by the gravitational force as described above, wherein the speed of the vehicle 100 will increase without any driving force having to be applied from the combustion engine 101 of the vehicle 100 to the driving wheels 113, 114 of the vehicle 100. Obviously, this does not apply to all downhill slopes, but generally, in relation to heavy goods vehicles, this situation usually arises, and, as opposed to lighter vehicles, it already arises on downhill slopes with a relatively small gradient.

In the example, it is assumed that the vehicle 100 is driven with the cruise control set at the maximum permitted speed of the vehicle 100. At the position P₂, at the point in time T_{B}, the vehicle 100 has accelerated, due to the gravitational force, to the speed *v*ₗᵢₘ, which constitutes the speed above which the vehicle 100 is deemed to commit a speeding violation. As mentioned above, this speed may be e.g. 90.5 km/h or 91 km/h when the maximum permitted speed of the vehicle 100 is 90 km/h, or e.g. 80.5 km/h or 81 km/h when the vehicle is driven with a trailer connected. When the vehicle 100 then reaches the position P₃, at the time T_{C}, the vehicle 100 reaches the speed *v_{kfb}*, which constitutes the constant speed brake's set speed, wherein the constant speed brake decelerates the vehicle 100 in order to subsequently substantially maintain this speed through applicable activation of one or several of the vehicle's brake systems, as long as the gravitational force strives to further increase the speed of the vehicle 100.

The vehicle 100 is thus driven from the position P₃ along the downhill slope at substantially the speed *v_{kfb}*, and thus also a speed exceeding the violation speed *v*ₗᵢₘ. At the position P₄ the downhill slope then reverts to a plane surface, so that the speed of the vehicle 100 decreases again toward the set cruise control speed *v_{f}*, and at the point in time T_{D} the speed of the vehicle 100 again falls below the violation speed *v*ₗᵢₘ. If the time T_{D}-T_{B}, i.e. the period of time during which the vehicle 100 has been driven at a speed exceeding *v*ₗᵢₘ, exceeds some determined violation period, such as e.g. 60 seconds, the driver will be deemed to have carried out a speeding violation, so that a remark (penalty point) is registered in the tachograph and/or on the driver's personal tachograph card.

As explained above, this remark may at a later control lead to fines, and remarks may also adversely affect the driver' e.g. in relation to e.g. an employer. In order to avoid that such situations arise, the vehicle 100 may be arranged to issue a warning to notify the driver of the imminent risk of incurring a remark regarding a speeding violation. This is illustrated in Fig. 2B, which corresponds to Fig. 2A, but where the vehicle 100 issues a warning at the point in time Tᵥ, e.g. when a certain portion of the permitted violation period has expired, such as e.g. 45 seconds of a 60 second period. Provided that the driver notices the warning, this usually results in a braking reaction, at the point in time T_{E} in Fig. 2B, where the driver, often relatively forcefully, brakes to reduce the speed of the vehicle 100 to a speed below the violation speed *v*ₗᵢₘ before the time T₁ has expired, in order thereby to avoid a remark.

This warning may however be difficult to notice, and also the warning system of the vehicle 100 may be such that different warning signals are prioritised, so that another current warning may have a higher priority, and so that the driver fails to notice the imminent risk of a speeding violation before the time T₁ has expired and the violation is therefore a fact. Thus the driver of the vehicle 100 may come up against undesired speeding violations in situations where the real reason for the increased speed of the vehicle 100 may be an effort to use available kinetic energy for reasons relating to fuel consumption. This risk of being encumbered with unwanted speeding remarks, and the risk that warnings prior to registration of such remarks are not noticed, may constitute an unwanted stress factor for the driver of the vehicle 100 when e.g. driving the vehicle 100 on downhill slopes.

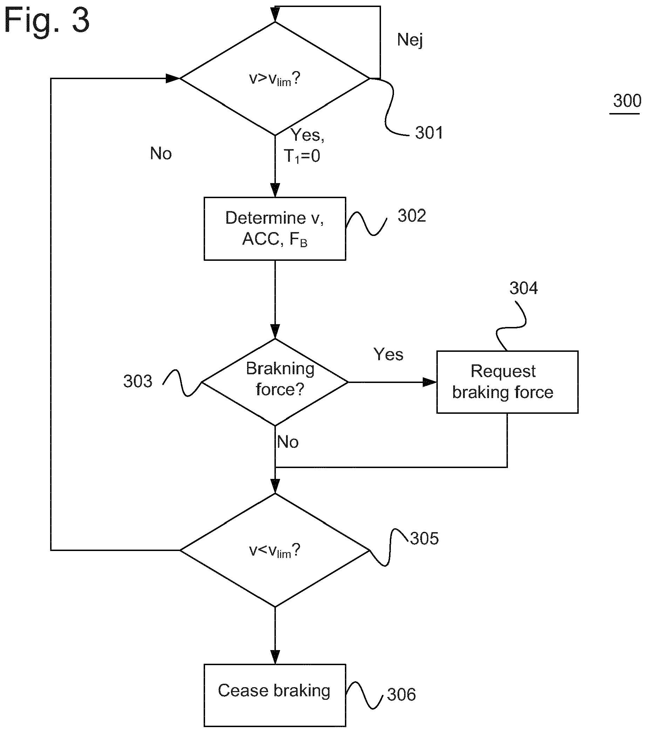

The present invention provides a method to reduce or eliminate the risk that such speeding violations arise. One example embodiment 300 according to the present invention is displayed in Fig. 3, where the method 300, according to the present invention, is arranged to be carried out by a control device 118 (displayed In Fig. 1A), which consists of a coordinator. The coordinator 118 in the present example constitutes a control device which is responsible for the communication on the different communication buses of the vehicle 100, which usually consist of more than one. The invention may however just as well be implemented in some other applicable control device, such as e.g. the brake device 116 or the control device(s) where the cruise control functions are implemented etc.

Generally, control systems in today's vehicles consist of a communications bus system consisting of one or several communication buses to connect a number of electronic control devices (ECUs) such as the control devices, or controllers, 115, 116, 118 and different components arranged on the vehicle 100. Such a control system may comprise a large number of control devices, and the responsibility for a specific function may be distributed among more than one control device. The invention may also be implemented in a control device dedicated to the present invention, or wholly or partly in one or several other control devices already existing in the vehicle. For the sake of simplicity, in Fig. 1A only a very limited number of control devices are displayed.

The function of the control device 118 (or the control device(s) at which the present invention is implemented) according to the present invention may e.g. depend on signals from e.g. the tachograph 117, and in this case, in particular regarding the vehicle's prevailing speed. Also, signals may both be received by and emitted to the brake control device 116, where the coordinator may e.g. obtain available braking force or other brake-related information, and issue e.g. a request for a certain deceleration. The control of the coordinator 118, according to the invention, may also depend on various other signals. Generally, control devices of the type displayed are normally arranged to receive sensor signals from different parts of the vehicle 100, as well as from different control devices arranged on the vehicle 100.

The control is often controlled by programmed instructions. These programmed instructions typically consist of a computer program, which, when it is executed in a computer or control device, causes the computer/control device to carry out the desired control action, as a method step in the process according to the present invention.

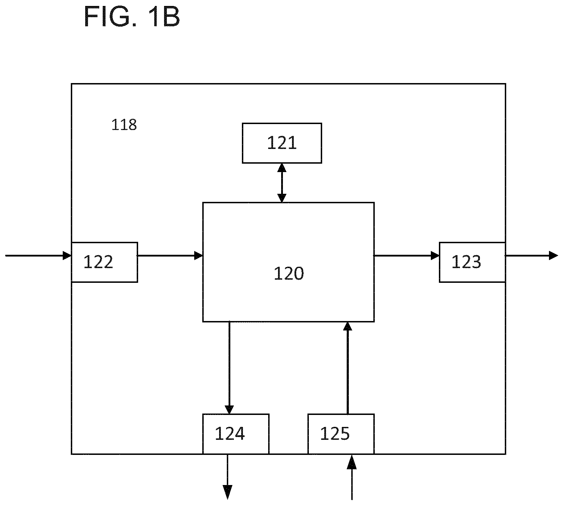

The computer program usually is a part of a computer program product, where the computer program product comprises an applicable storage medium 121 (see Fig. 1B), with the computer program stored on said storage medium 121. Said digital storage medium 121 may e.g. consist of any from the following group: ROM (Read-Only Memory), PROM (Programmable Read-Only Memory), EPROM (Erasable PROM), Flash, EEPROM (Electrically Erasable PROM), a hard disk unit, etc., and may be set up in or in combination with the control device, where the computer program is executed by the control device. By changing the computer program's instructions, the vehicle's behaviour may thus be adjusted in a specific situation.

One example control device (the control device 118) is displayed schematically in Fig. 1B, and the control device in turn may comprise a calculation unit 120, which may consist of e.g. a suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121, which provides the calculation unit 120 with e.g. the stored program code and/or the stored data which the calculation unit 120 needs in order to be able to carry out calculations. The calculation unit 120 is also set up to store interim or final results of calculations in the memory unit 121.

Further, the control device is equipped with devices 122, 123, 124, 125 for receipt and sending of input and output signals, respectively. These input and output signals may contain waveforms, pulses, or other attributes which by the devices 122, 125 for the receipt of input signals may be detected as information for processing by the calculation unit 120. The devices 123, 124 for sending output signals are arranged to convert the calculation result from the calculation unit 120 into output signals for transfer to other parts of the vehicle's control system and/or the component(s) for which the signals are intended. Each one of the connections to the devices for receipt and sending of input and output signals may consist of one or several of the following; a cable, a data bus, such as a CAN (Controller Area Network) bus, a MOST (Media Oriented Systems Transport) bus, or any other bus configuration; or of a wireless connection.

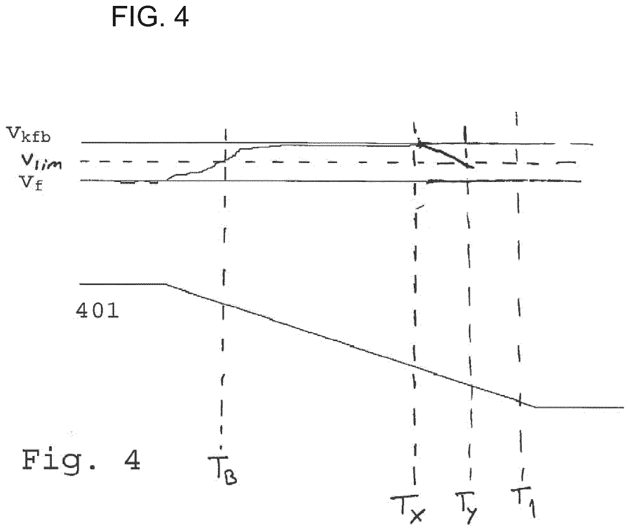

Reverting to Fig. 3, an example embodiment 300 according to the present invention is displayed. The method according to the present example begins at step 301, where it is determined whether the speed v of the vehicle 100 exceeds the violation speed *v*ₗᵢₘ. As long as this is not the case, the method remains at step 301. When the speed v of the vehicle 100 exceeds the violation speed *v*ₗᵢₘ, displayed at T_{B} in Fig. 4, the method continues to step 302, at the same time as a timer T₁ is set at zero and started. In step 302 the speed v of the vehicle 100, the prevailing acceleration ACC of the vehicle 100 and the available braking force F_{B} of the vehicle 100 are then determined.

The vehicle speed v is usually available on the communication bus system, and consists in the present example preferably of the speed determined by the tachograph 117. The vehicle speed may also be arranged to be determined in another applicable manner, which is usually also carried out by other control devices, e.g. through the use of applicable rotational sensors. Also, the prevailing acceleration of the vehicle 100 is usually available, or alternatively it may be determined with knowledge about the speed of the vehicle 100.

In relation to the available braking force F_{B} of the vehicle 100, this may either be specified in advance, e.g. expressed as an available deceleration in m/s² in the control system of the vehicle 100, or alternatively it may for example be defined as a smallest braking force which must, according to statute, or for some other reason, always be available, or e.g. it may consist of a maximum desirable deceleration, where e.g. harder braking than some applicable deceleration should not be applied for some reason.

The method then continues to step 303, where it is determined whether a braking force should be applied. This calculation may be carried out according to different criteria, and based on different parameters, such as the vehicle's prevailing speed, the time which has lapsed since the timer T₁ was zeroed and started, the available braking force, etc.

For example, it may be determined how much time remains until a remark relating to a speeding violation will be registered. In this case, the method may be arranged not to initiate braking as long as a certain period of time remains until a remark will be registered. For example, the method may be arranged not to initiate braking as long as some applicable number of seconds in the interval 0-45 seconds remains until a speeding violation is registered.

According to one embodiment, the brakes are not applied until it is determined that braking must be activated for the vehicle 100 to be decelerated to a speed below *v*ₗᵢₘ before said first time period T₁ has expired. In this case, a duration for deceleration of the vehicle 100 to a speed below *v*ₗᵢₘ may be estimated, wherein the estimation may be carried out based on the prevailing speed, acceleration and available braking force of the vehicle 100. The calculation may be carried out substantially continuously, such as an applicable number of times per second, wherein the braking force applied may continuously, where required, be adapted to new prerequisites, and may for example be increased if the vehicle's acceleration due to an increased road gradient e.g. becomes greater, with a greater braking force requirement as a consequence.

According to one embodiment braking may be arranged to be requested only when a warning to the driver has been issued, or alternatively if it is concluded that the driver has not taken any measure even though a warning has been issued, such as e.g. a certain number of seconds after the warning has been issued. Simultaneously, it may be determined how much time is required for the vehicle to be decelerated to a speed below *v*ₗᵢₘ

According to one embodiment, the available braking force does not consist of the vehicle's actual available braking force, but instead of e.g. a maximum deceleration, wherein it may be desirable, due to the type of cargo or for some other reason, that the deceleration should not exceed some applicable value, e.g. expressed in m/s². For example, some drivers may prefer hard braking while other drivers prefer a softer braking.

According to one embodiment, topographical information relating to the route ahead of the vehicle is used. In this case, knowledge about future changes in the gradient of the surface on which the vehicle is travelling may be taken into consideration in the calculation of the applicable point in time for applying a braking force. Also, the size of the braking force which should be applied may be determined with the use of such data. This topographical information may for example be obtained with positioning information, such as GPS-information (Global Positioning System-information) or similar positioning systems, map information and/or topographical information. Positioning information may be used to determine where the vehicle is located, and map information and/or topographical map information may subsequently be used to determine future changes relating to the gradient of the surface on which the vehicle is travelling. Such information is often available via e.g. so-called look-ahead cruise control functions, where such data is used to adapt the vehicle's speed to changes in road gradient.

As explained above, however, the invention according to one preferred embodiment does not require knowledge of the surface ahead of the vehicle, but an estimation of whether braking force is required is carried out without the use of data regarding the vehicle's position, i.e. thus also without knowledge about data regarding the surface ahead of the vehicle.

Generally, the above criteria for activation of braking may be combined in any manner with each other, as well as with criteria that have not been specified herein.

When it is thus determined in step 303 that a braking force shall be applied, the method continues to step 304 where a request for an applicable braking force is made by e.g. the brake control device 116, e.g. expressed in a desired deceleration, where the brake control device 116 may then apply the desired braking force with the use of applicable brake systems, where the specific choice of brake system may be determined by other processes and thus does not form the subject of the present invention. The vehicle 100 thus begins to decelerate, as indicated at Tₓ in Fig. 4.

The method then continues from step 304, and from step 303, when it is determined that braking should not yet begin, to step 305, where it is determined whether the speed of the vehicle 100 still exceeds the speed *v*ₗᵢₘ. As long as this is the case, the method reverts to step 302 for a new determination of the speed and acceleration of the vehicles 100, in order to determine yet again in step 303, whether braking should be activated if this has not already been applied.

Every time the method passes step 303, e.g. a new request for braking force may be determined in order e.g. to take into consideration changed circumstances, such as e.g. changes in prevailing acceleration according to the above, where the braking force may, where needed, be decreased or increased depending on how the acceleration of the vehicle 100 develops. According to one embodiment a greater braking force may be used at the beginning of the braking, than what is e.g. required according to the prevailing acceleration, in order to brake the vehicle to a speed below *v*ₗᵢₘ before said first period of time has expired. In this manner, a margin is achieved, e.g. in case the gradient increases in connection with the deceleration. This braking force may then be corrected/reduced if, further along during the deceleration, it is noted that the desired speed reduction is expected to be carried out with a reduced braking force.

If subsequently, in step 305, it is determined that the speed of the vehicle 100 is below the speed *v*ₗᵢₘ, indicated with Ty in Fig. 4, and the risk of incurring a remark thus no longer exists, the method continues to step 306 where the request for braking force is interrupted, wherein the method may be ended or alternatively revert to step 301 in order to determine whether the speed of the vehicle 100 again exceeds the speed *v*ₗᵢₘ. The speed of the vehicle 100 may thus in this case be permitted to increase again if the downhill slope has not yet planed out.

The present invention thus provides a method which ensures that the vehicle's driver is not encumbered with unwanted/unexpected remarks relating to speeding violations. This in turn entails that a driver may drive the vehicle in a more relaxed state, since the consequences of e.g. not noticing an imminent remark are alleviated or eliminated.

Further, according to one embodiment it is unnecessary to determine the vehicle's acceleration or available braking force. In this case, e.g. a maximum period of time required to decelerate the vehicle may be determined in advance, e.g. in order for the vehicle to be decelerated with certainty at a certain deceleration, wherein only the fact that deceleration has started needs to be ensured, so that the vehicle's speed is able to fall below *v*ₗᵢₘ before the time T₁ has expired.

It should also be realised that even though the invention has been exemplified in a vehicle where a constant speed brake is applied, this is not necessary for the function of the present invention, but instead the invention is as applicable in vehicles without a constant speed brake and/or where the constant speed brake is not activated. Further, the invention is applicable in situations where the vehicle is driven without an activated cruise control function, since similar situations may arise also when the vehicle is driven without any activated cruise control function.

The present invention is also applicable in hybrid vehicles, where, in addition to the combustion engine, one or several additional power sources, such as one or several electrical engines, may be used in e.g. deceleration of the vehicle.

Further, the vehicle has been exemplified for certain speed limits, but it should be realised that the invention is applicable also with other speed limits.

The present invention is not limited to the above described embodiments of the invention, but pertains to and comprises all embodiments within the scope of the enclosed independent claims.

## Claims

1. Method to decelerate a vehicle (100), wherein said vehicle (100) comprises a control system and at least one by said control system activated brake system to apply a braking force in order to decelerate said vehicle (100), **characterised in that** the method comprises, when said vehicle (100) is driven at a speed exceeding a first speed (*v*ₗᵢₘ), to estimate whether the application of a braking force is required for the speed (*v*) of said vehicle (100) to fall below said first speed (*v*ₗᵢₘ) before a first period of time (*T*₁) has expired, and
- when the application of a braking force is required, to request the application of a first braking force (F_{B}) to decelerate said vehicle.

2. Method according to claim 1, also comprising to decelerate said vehicle to a speed below said first speed (*v*ₗᵢₘ) before said first period of time (*T*₁) has expired.

3. Method according to claim 2, also comprising to determine said first braking force (F_{B}) as a braking force by which the speed for said vehicle is estimated to fall below said first speed (*v*ₗᵢₘ) before said first period of time ( *T*₁) has expired.

4. Method according to any of claims 1-3, wherein said first period of time (*T*₁) is calculated as of the moment when said first speed (*v*ₗᵢₘ) is exceeded.

5. Method according to any of the previous claims, also comprising:
- to determine whether a second period of time, briefer than said first period of time (*T*₁), has expired, and,
- to apply said first braking force (F_{B}) only when said second period of time has expired.

6. Method according to any of the previous claims, also comprising:
- to determine a size for said first braking force (F_{B}) based on one or several of: the vehicle's acceleration, the vehicle's speed, available braking force.

7. Method according to any of the previous claims, also comprising:
- to determine a point in time for activation of said first braking force (F_{B}), based on one or several of: the vehicle's acceleration, the vehicle's speed, the available braking force.

8. Method according to any of the previous claims, also comprising:
- to determine a point in time for activation of said first braking force (F_{B}), wherein said point in time is determined at least partly based on a remaining time until said first period of time has expired, and/or the period of time which has lapsed since said first speed ( *v*ₗᵢₘ) was exceeded.

9. Method according to any of the previous claims, also comprising to estimate a required deceleration time to decelerate said vehicle (100) to said first speed (*v*ₗᵢₘ), and to begin deceleration before a period of time corresponding to said required deceleration time remains until said first period of time (*T*₁) has expired.

10. Method according to any of the previous claims, also comprising to determine whether a notification signal has been issued to notify the driver of the vehicle (100) of the fact that said first speed has been exceeded, and
- to apply said first braking force if said signal has been issued.

11. Method according to claim 10, also comprising to apply said first braking force if a third period of time has expired since said notification signal has been issued.

12. Method according to any of the previous claims, wherein said vehicle (100) comprises a tachograph (117), and wherein a remark regarding a speeding violation is registered in said tachograph (117) when said first speed (*v*ₗᵢₘ) has been exceeded during a time period corresponding to, or exceeding, said first period of time (*T*₁).

13. Method according to any of the previous claims, wherein said first braking force constitutes a smaller braking force compared to the maximum available braking force.

14. Method according to any of the previous claims, also comprising, during the deceleration of said vehicle, to determine whether a correction of said first braking force is required, and
- where required to correct said first braking force.

15. Method according to any of the previous claims, also comprising to interrupt the application of said first braking force when the speed of said vehicle (100), after it has exceeded said first speed (*v*ₗᵢₘ), again falls below said first speed (*v*ₗᵢₘ).

16. Method according to any of the previous claims, wherein said first braking force is determined at least partly based on data relating to the route ahead of the vehicle (100), wherein said data consists of at least one out of the group:
- the gradient of the vehicle's route ahead;
- data relating to the road's topography for the route ahead of the vehicle (100);
- the position of the vehicle (100).

17. Method according to any of the previous claims, wherein estimation of whether the application of a braking force is required for the speed (*v*) of said vehicle (100) to fall below said first speed (*v*ₗᵢₘ) before a first period of time (*T*₁) has expired is carried out without any use of data relating to the vehicle's position.

18. A computer program comprising a program code which, when said program code is executed in a computer, achieves that said computer carries out the method according to any of claims 1-17.

19. Computer program product comprising a computer-readable medium and a computer program according to claim 18, said computer program being comprised in said computer-readable medium.

20. System to decelerate a vehicle (100), wherein said vehicle (100) comprises a control system (118) and at least one braking system (116) which may be activated by said control system (118) for the application of a braking force to decelerate said vehicle (100), **characterised in that** the system comprises:
- elements arranged to estimate, when said vehicle (100) is driven with a speed exceeding a first speed (*v*ₗᵢₘ), whether the application of a braking force is required for the speed (*v*) of said vehicle (100) to fall below said first speed (*v*ₗᵢₘ) before a first period of time (*T*₁) has expired, and
- elements arranged, when the application of a braking force is required, to request the application of a first braking force to decelerate said vehicle.

21. Vehicle (100), **characterised in that** it comprises a system according to claim 20.

## Patentansprüche

1. Verfahren zum Verlangsamen eines Fahrzeugs (100), wobei das Fahrzeug (100) ein Steuersystem und mindestens ein durch das Steuersystem aktiviertes Bremssystem umfasst, um eine Bremskraft zum Verlangsamen des Fahrzeugs (100) anzuwenden, **dadurch charakterisiert, dass** das Verfahren umfasst, wenn das Fahrzeug (100) mit einer Geschwindigkeit größer als eine erste Geschwindigkeit (vₗᵢₘ) fährt, abzuschätzen, ob die Anwendung einer Bremskraft notwendig ist, um die Geschwindigkeit (v) des Fahrzeugs (100) unter die erste Geschwindigkeit (vₗᵢₘ) zu bringen, bevor eine erste Zeitperiode (T₁) abgelaufen ist, und
- wenn die Anwendung der Bremskraft notwendig ist, die Anwendung einer ersten Bremskraft (F_{B}) zum Verlangsamen des Fahrzeugs zu verlangen.

2. Verfahren nach Anspruch 1, welches auch umfasst, das Fahrzeug zu verlangsamen auf eine Geschwindigkeit unter der ersten Geschwindigkeit (vₗᵢₘ), bevor die erste Zeitperiode (T₁) abgelaufen ist.

3. Verfahren nach Anspruch 2, welches auch umfasst, die erste Bremskraft (F_{B}) als eine Bremskraft zu bestimmen, bei welcher erwartet wird, dass die Geschwindigkeit des Fahrzeugs unter die erste Geschwindigkeit (vₗᵢₘ) fällt, bevor die erste Zeitperiode (T₁) abgelaufen ist.

4. Verfahren nach einem der Ansprüche 1-3, wobei die erste Zeitperiode (T₁) berechnet wird anhand des Moments, wenn die erste Geschwindigkeit (vₗᵢₘ) überschritten wird.

5. Verfahren nach einem der vorigen Ansprüche, welches auch umfasst:
- zu bestimmen, ob eine zweite Zeitperiode abgelaufen ist, welche kürzer als die erste Zeitperiode (T₁) ist, und
- die erste Bremskraft (F_{B}) nur anzuwenden, wenn die zweite Zeitperiode abgelaufen ist.

6. Verfahren nach einem der vorigen Ansprüche, welches auch umfasst:
- eine Größe der ersten Bremskraft (F_{B}) zu bestimmen, basierend auf einem oder mehreren von: Beschleunigung des Fahrzeugs, Geschwindigkeit des Fahrzeugs, verfügbare Bremskraft.

7. Verfahren nach einem der vorigen Ansprüche, welches auch umfasst:
- einen Zeitpunkt zum Aktivieren der ersten Bremskraft (F_{B}) zu bestimmen, basierend auf einem oder mehreren von: Beschleunigung des Fahrzeugs, Geschwindigkeit des Fahrzeugs, verfügbare Bremskraft.

8. Verfahren nach einem der vorigen Ansprüche, welches auch umfasst:
- einen Zeitpunkt zum Aktivieren der ersten Bremskraft (F_{B}) zu bestimmen, wobei der Zeitpunkt zumindest teilweise bestimmt wird basierend auf einer verbleibenden Zeit, bis die erste Zeitperiode abgelaufen ist und/oder auf der Zeitperiode, welche vergangen ist, seit die erste Geschwindigkeit (vₗᵢₘ) überschritten wurde.

9. Verfahren nach einem der vorigen Ansprüche, welches auch umfasst eine Verzögerungszeit abzuschätzen zum Verlangsamen des Fahrzeugs (100) auf die erste Geschwindigkeit (vₗᵢₘ) und (ein) Verlangsamen anzufangen, bevor eine Zeitperiode, bis die erste Zeitperiode (T₁) abgelaufen ist, verbleibt, welche der benötigten Verzögerungszeit entspricht.

10. Verfahren nach einem der vorigen Ansprüche, welches auch umfasst, zu bestimmen, ob ein Benachrichtigungssignal ausgegeben wurde, um den Fahrer des Fahrzeugs von der Tatsache zu benachrichtigen, dass die erste Geschwindigkeit überschritten wurde, und
- die erste Bremskraft anzuwenden, wenn das Signal abgegeben wurde.

11. Verfahren nach Anspruch 10, welches auch umfasst, die erste Bremskraft anzuwenden, wenn eine dritte Zeitperiode abgelaufen ist, seit das Benachrichtigungssignal abgegeben wurde.

12. Verfahren nach einem der vorigen Ansprüche, wobei das Fahrzeug (100) einen Fahrtenschreiber (117) umfasst und wobei eine Notiz bezüglich der Geschwindigkeitsüberschreitung in dem Fahrtenschreiber (117) eingetragen wird, wenn die erste Geschwindigkeit (vₗᵢₘ) für eine Zeit größer oder gleich der erste Zeitperiode (T₁) überschritten wurde.

13. Verfahren nach einem der vorigen Ansprüche, wobei die erste Bremskraft eine kleinere Bremskraft als die maximal verfügbare Bremskraft darstellt.

14. Verfahren nach einem der vorigen Ansprüche, welches auch umfasst, während des Verlangsamens des Fahrzeugs zu bestimmen, ob eine Korrektur der erste Bremskraft notwendig ist, und dann
- wenn notwendig, die erste Bremskraft zu korrigieren.

15. Verfahren nach einem der vorigen Ansprüche, welches auch umfasst, die Anwendung der ersten Bremskraft zu unterbrechen, wenn die Geschwindigkeit des Fahrzeugs (100), nachdem sie die erste Geschwindigkeit (vₗᵢₘ) überschritten hatte, wieder unter die erste Geschwindigkeit (vₗᵢₘ) fällt.

16. Verfahren nach einem der vorigen Ansprüche, wobei die erste Bremskraft zumindest teilweise bestimmt wird basierend auf Daten, die die vorausliegende Strecke des Fahrzeugs (100) betreffen, wobei die Daten aus zumindest einem der folgenden Gruppe bestehen:
- der Neigung der vorausliegenden Strecke des Fahrzeugs;
- Daten betreffend der Topographie der Straße für die vorausliegende Strecke des Fahrzeugs (100);
- der Position des Fahrzeugs (100).

17. Verfahren nach einem der vorigen Ansprüche, wobei eine Abschätzung, ob die Anwendung einer Bremskraft notwendig ist, um die Geschwindigkeit (v) des Fahrzeugs (100) unter die erste Geschwindigkeit (vₗᵢₘ) zu bringen, bevor eine erste Zeitperiode abgelaufen ist, ausgeführt wird, ohne die Daten betreffend der Position des Fahrzeugs zu nutzen.

18. Computerprogramm, welches Programmcode umfasst, welcher erreicht, dass der Computer das Verfahren nach einem der Ansprüche 1-17 ausführt, wenn der Programmcode von einem Computer ausgeführt wird.

19. Computerprogrammprodukt, welches ein computerlesbares Medium und ein Computerprogramm nach Anspruch 18 umfasst, wobei das Computerprogramm in dem computerlesbaren Medium umfasst ist.

20. System, um ein Fahrzeug (100) zu verlangsamen, wobei das Fahrzeug (100) ein Kontrollsystem (118) und mindestens ein Bremssystem (116) umfasst, welches von dem Kontrollsystem für die Anwendung einer Bremskraft zum Verlangsamen des Fahrzeugs (100) aktiviert werden kann, **dadurch charakterisiert, dass** das System umfasst:
- Bestandteile, die dann eingerichtet sind, um abzuschätzen, wenn das Fahrzeug (100) mit einer Geschwindigkeit größer als eine erste Geschwindigkeit (vₗᵢₘ) gefahren wird, ob die Anwendung einer Bremskraft notwendig ist, um die Geschwindigkeit (v) des Fahrzeugs (100) unter die erste Geschwindigkeit (vₗᵢₘ) zu bringen, bevor eine erste Zeitperiode (T₁) abgelaufen ist, und
- Bestandteile, die dann eingerichtet sind, um dann, wenn die Anwendung einer Bremskraft notwendig ist, die Anwendung einer erste Bremskraft zum Verlangsamen des Fahrzeugs zu verlangen.

21. Fahrzeug (100), **dadurch charakterisiert, dass** es ein System nach Anspruch 20 umfasst.

## Revendications

1. Procédé pour décélérer un véhicule (100), dans lequel ledit véhicule (100) comprend un système de commande et au moins un système de freinage activé par ledit système de commande pour appliquer une force de freinage afin de décélérer ledit véhicule (100), **caractérisé en ce que** le procédé comprend, lorsque ledit véhicule (100) est entraîné à une vitesse dépassant une première vitesse (vₗᵢₘ), d'estimer si l'application d'une force de freinage est requise pour que la vitesse (v) dudit véhicule (100) chute en dessous de ladite première vitesse (vₗᵢₘ) avant l'expiration d'une première période de temps (*T*₁), et
- lorsque l'application d'une force de freinage est requise, de demander l'application d'une première force de freinage (F_{B}) pour décélérer ledit véhicule.

2. Procédé selon la revendication 1, comprenant en outre la décélération dudit véhicule à une vitesse inférieure à ladite première vitesse (vₗᵢₘ) avant l'expiration de la première période de temps (*T₁*).

3. Procédé selon la revendication 2, comprenant en outre la détermination de ladite première force de freinage (F_{B}) en tant que force de freinage à l'aide de laquelle on estime que la vitesse dudit véhicule chute en dessous de ladite première vitesse (vₗᵢₘ) avant l'expiration de ladite première période de temps (*T₁*).

4. Procédé selon l'une quelconque des revendications 1 à 3, dans lequel ladite première période de temps (*T₁*) est calculée comme le moment où ladite première vitesse (vₗᵢₘ) est dépassée.

5. Procédé selon l'une quelconque des revendications précédentes, comprenant également :
- de déterminer si une deuxième période de temps, plus courte que ladite première période de temps (*T₁*), a expiré, et,
- d'appliquer ladite première force de freinage (F_{B}) seulement lorsque ladite deuxième période de temps a expiré.

6. Procédé selon l'une quelconque des revendications précédentes, comprenant également :
- de déterminer une grandeur pour ladite première force de freinage (F_{B}) sur la base d'un ou plusieurs des éléments suivants : l'accélération du véhicule, la vitesse du véhicule, une force de freinage disponible.

7. Procédé selon l'une quelconque des revendications précédentes, comprenant également :
- de déterminer un point dans le temps pour l'activation de ladite première force de freinage (F_{B}), sur la base d'un ou plusieurs des éléments suivants : l'accélération du véhicule, la vitesse du véhicule, la force de freinage disponible.

8. Procédé selon l'une quelconque des revendications précédentes, comprenant également :
- de déterminer un point dans le temps pour l'activation de ladite première force de freinage (F_{B}), ledit point dans le temps étant déterminé au moins partiellement sur la base d'un temps restant jusqu'à l'expiration de ladite première période de temps, et/ou de la période de temps qui s'est écoulée depuis que ladite première vitesse (vₗᵢₘ) a été dépassée.

9. Procédé selon l'une quelconque des revendications précédentes, comprenant en outre d'estimer un temps de décélération requis pour décélérer ledit véhicule (100) jusqu'à ladite première vitesse (vₗᵢₘ), et de commencer la décélération avant qu'une période de temps correspondant au temps de décélération requis subsiste jusqu'à l'expiration de ladite première période de temps (*T₁*).

10. Procédé selon l'une quelconque des revendications précédentes, comprenant également de déterminer si un signal de notification a été émis pour informer le conducteur du véhicule (100) du fait que ladite première vitesse a été dépassée, et
- d'appliquer ladite première force de freinage si ledit signal a été émis.

11. Procédé selon la revendication 10, comprenant en outre l'application de ladite première force de freinage si une troisième période de temps a expiré depuis que ledit signal de notification a été émis.

12. Procédé selon l'une quelconque des revendications précédentes, dans lequel ledit véhicule (100) comprend un tachygraphe (117), et dans lequel une note concernant un excès de vitesse est enregistrée dans ledit tachygraphe (117) lorsque ladite première vitesse (vₗᵢₘ) a été dépassée pendant une période de temps correspondant à ladite première période de temps (*T₁*) ou dépassant celle-ci.

13. Procédé selon l'une quelconque des revendications précédentes, dans lequel ladite première force de freinage constitue une force de freinage plus petite par comparaison à la force de freinage maximum disponible.

14. Procédé selon l'une quelconque des revendications précédentes, comprenant également, pendant la décélération dudit véhicule, de déterminer si une correction de ladite première force de freinage est requise, et
- si nécessaire de corriger ladite première force de freinage.

15. Procédé selon l'une quelconque des revendications précédentes, comprenant également l'interruption de l'application de ladite première force de freinage lorsque la vitesse dudit véhicule (100), après avoir dépassé ladite première vitesse (vₗᵢₘ), chute de nouveau en dessous de ladite première vitesse (vₗᵢₘ).

16. Procédé selon l'une quelconque des revendications précédentes, dans lequel ladite première force de freinage est déterminée au moins partiellement sur la base de données relatives au parcours de route du véhicule (100), dans lequel lesdites données consistent en au moins un élément parmi le groupe suivant :
- le gradient du parcours de route du véhicule ;
- des données relatives à la topographie de la route pour le parcours de route du véhicule (100) ;
- la position du véhicule (100).

17. Procédé selon l'une quelconque des revendications précédentes, dans lequel l'estimation pour savoir si l'application d'une force de freinage est requise pour que la vitesse (v) dudit véhicule (100) chute en dessous de ladite première vitesse (vₗᵢₘ) avant l'expiration d'une première période de temps (*T₁*), est effectuée sans une quelconque utilisation de données relatives à la position du véhicule.

18. Programme informatique comprenant un code de programme qui, lorsque ledit code de programme est exécuté dans un ordinateur, amène ledit ordinateur à exécuter le procédé selon l'une quelconque des revendications 1 à 17.

19. Produit de programme informatique comprenant un support lisible par ordinateur et un programme informatique selon la revendication 18, ledit programme informatique étant inclus dans ledit support lisible par ordinateur.

20. Système de décélération d'un véhicule (100), dans lequel ledit véhicule (100) comprend un système de commande (118) et au moins un système de freinage (116) qui peut être activé par ledit système de commande (118) pour l'application d'une force de freinage afin de décélérer ledit véhicule (100), **caractérisé en ce que** le système comprend :
- des éléments conçus pour estimer, lorsque ledit véhicule (100) est entraîné à une vitesse dépassant une première vitesse (vₗᵢₘ), si l'application d'une force de freinage est requise pour que la vitesse (v) dudit véhicule (100) chute en dessous de ladite première vitesse (vₗᵢₘ) avant l'expiration d'une première période de temps (*T₁*), et
- des éléments conçus, lorsque l'application d'une force de freinage est requise, pour demander l'application d'une première force de freinage pour décélérer ledit véhicule.

21. Véhicule (100), **caractérisé en ce qu'**il comprend un système selon la revendication 20.
